# DEMANDE DE BREVET EUROPEEN

(11) **EP 0 803 951 A1**
(43) Date de publication de la demande: **29.10.1997**
(21) Numéro de dépôt: 97400906.0
(22) Date de dépôt: 22.04.1997
(51) Int. Cl.: H02G 3/04, H02G 3/02

(54) **Conduit annelé à anneaux de repérage**

(30) Priorité: 24.04.1996 FR 9605179
(71) Demandeur: Société d'Usinage des Tubes pour l'Electricité, 54700 Pont-à-Mousson (FR)
(72) Inventeur: Centazzo, Didier, 54700 Pont-a-Mousson (FR)
(74) Mandataire: CABINET BONNET-THIRION

(57) **Abrégé**

Il s'agit d'un conduit annelé du genre dont la paroi (10), ondulée longitudinalement dans son épaisseur, suivant un pas (P) régulier, forme transversalement des anneaux (12), avec, périodiquement, un anneau (12'), dit anneau de repérage, de largeur (L') supérieure à celle (L) des autres anneaux (12).

Suivant l'invention, l'anneau de repérage (12') est dépourvu de tout marquage, et, établi systématiquement à une distance (P') proche du mètre, il constitue par lui-même un simple repère de longueur pour le conduit annelé (11).

Application aux conduits annelés destinés au logement et à la protection d'au moins un câble électrique.

## Description

La présente invention concerne d'une manière générale les conduits annelés, c'est-à-dire les conduits du genre dont la paroi, ondulée longitudinalement dans son épaisseur, en pratique suivant un pas régulier, forme transversalement des anneaux.

Ces conduits sont couramment utilisés pour le logement et la protection d'un ou plusieurs câbles électriques, et, le plus souvent, ils sont implantés dans des sols ou des cloisons, en étant en pratique noyés dans ceux-ci.

Le plus souvent, également, ces conduits, qui sont en pratique des conduits souples, sont livrés en couronnes.

Autrement dit, réalisés en grande longueur, ils sont lovés sur eux-mêmes de manière à former une couronne globalement annulaire.

Lors de la mise en oeuvre d'un tel conduit, il appartient, donc, à son utilisateur, de dévider de la couronne dont il dispose la longueur qui lui est plus précisément nécessaire.

A ce jour, l'utilisateur doit en pratique se servir, pour ce faire, d'un mètre, et, par exemple, d'un mètre à ruban.

Cela impose qu'il ait effectivement à sa disposition un tel mètre, ce qui n'est pas toujours nécessairement le cas.

Il a été proposé, par ailleurs, pour assurer une certaine identification des conduits annelés du genre en cause, de prévoir, périodiquement, le long d'un tel conduit, un anneau, dit ci-après par simple commodité anneau de repérage, de largeur supérieure à celle des autres.

En pratique, dans les réalisations de ce type connues à ce jour, cet anneau de repérage fait dès l'origine l'objet d'un marquage se rapportant par exemple au calibre du conduit concerné et/ou au nom de son fabricant.

Plutôt qu'un réel anneau de repérage, il s'agit donc plus simplement d'un anneau de marquage.

En outre, il intervient à une périodicité, de l'ordre de 2 à 3 m, beaucoup trop importante et beaucoup trop éloignée du mètre pour que l'utilisateur puisse s'affranchir de l'usage d'un mètre pour apprécier la longueur de conduit à dévider.

Enfin, le marquage qui est le sien intervenant en pratique en saillie, à la manière d'une gravure, il a par lui-même un diamètre nominal inférieur à celui des autres anneaux, pour que, avec ce marquage, il reste dans le contour transversal hors tout de ceux-ci, et il est donc susceptible de constituer un point local de faiblesse pour le conduit, notamment en ce qui concerne la résistance au cisaillement de celui-ci.

La présente invention a d'une manière générale pour objet une disposition permettant de s'affranchir de l'usage d'un mètre pour apprécier au mieux la longueur d'un conduit annelé sans que, conjointement, il en résulte les inconvénients succinctement évoqués précédemment.

De manière plus précise, elle a pour objet un conduit annelé du genre dont la paroi, ondulée longitudinalement dans son épaisseur, suivant un pas régulier, forme transversalement des anneaux, avec, périodiquement, un anneau de largeur supérieure à celle des autres anneaux, dit ci-après par simple commodité, anneau de repérage, ce conduit annelé étant d'une manière générale caractérisé en ce que l'anneau de repérage est dépourvu de tout marquage, et, établi systématiquement à une distance proche du mètre, il constitue par lui-même un simple repère de longueur pour le conduit.

Par distance proche du mètre on entend une distance qui est sensiblement égale au mètre à un pas près des anneaux du conduit.

Suivant la valeur de ce pas elle peut donc être légèrement supérieure au mètre, ou légèrement inférieure à celui-ci.

Quoi qu'il en soit, étant de largeur supérieure à celle des autres anneaux, et rompant ainsi avec l'harmonie de l'ensemble, les anneaux de repérage mis en oeuvre suivant l'invention permettent avantageusement un repérage visuel d'une distance proche du mètre, et ils facilitent ainsi par eux-mêmes l'appréciation de la longueur de conduit à dévider.

Préférentiellement, pour que ce repérage puisse se faire également de manière tactile, au simple défilement du conduit entre les doigts, les anneaux de repérage prévus suivant l'invention ont un état de surface différent de celui des autres anneaux.

Par exemple, ils ont un état de surface plus rugueux que celui de ceux-ci.

Mais, étant dépourvus de tout marquage, ils peuvent avantageusement avoir transversalement un diamètre égal à celui des autres anneaux.

Il est ainsi possible de faire en sorte qu'ils ne nuisent en rien aux caractéristiques mécaniques du conduit, et, notamment, à sa résistance au cisaillement.

Les caractéristiques et avantages de l'invention ressortiront d'ailleurs de la description qui va suivre, à titre d'exemple, en référence aux dessins schématiques annexés sur lesquels :
la figure 1 est, avec un arrachement local, une vue partielle en perspective d'un conduit annelé suivant l'invention ;
la figure 2 en est, à échelle supérieure, une vue partielle en coupe longitudinale, suivant la ligne II-II de la figure 1 ;
la figure 3 en est une vue en coupe transversale, suivant la ligne III-III de la figure 2 ;
la figure 4 en est une vue en plan, suivant la flèche IV de la figure 2.

Tel qu'illustré sur ces figures, et de manière connue en soi, la paroi 10 du conduit annelé 11 suivant l'invention, c'est-à-dire la paroi tubulaire de forme générale cylindrique de ce conduit annelé 11, est ondulée longitudinalement dans son épaisseur, suivant, en pratique, un pas P régulier, et elle forme ainsi transversalement des anneaux 12.

En pratique, dans la forme de réalisation représentée, la paroi 10 a, globalement, en section transversale, un contour circulaire, et il en est donc de même pour les anneaux 12.

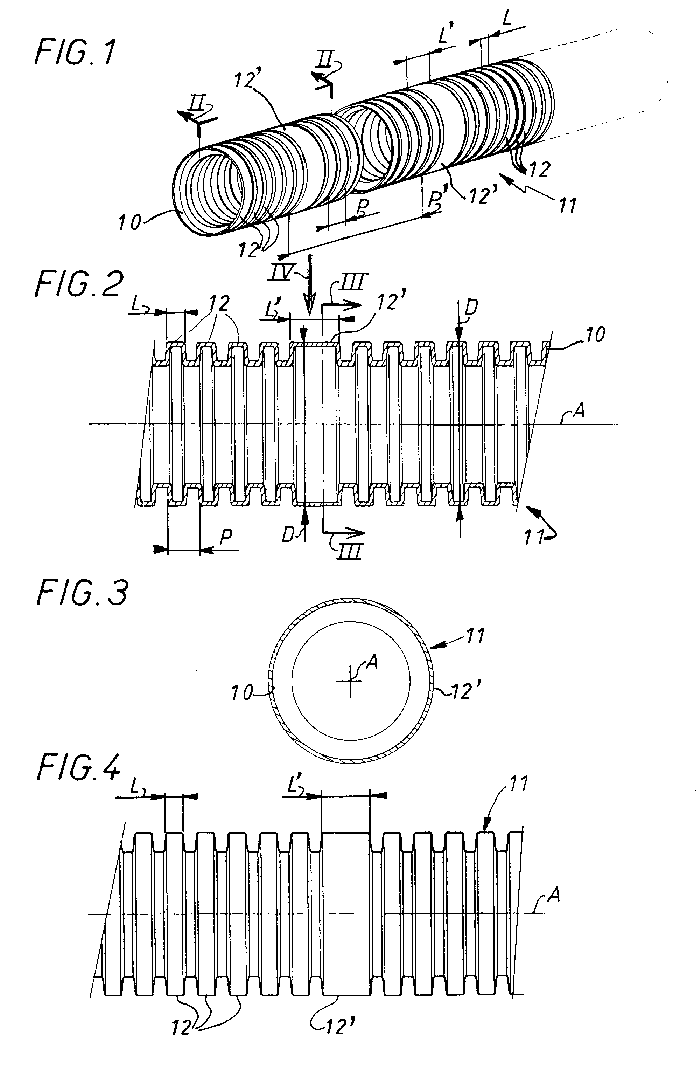

Soit A l'axe commun aux anneaux 12, tel que schématisé en traits interrompus sur les figures 2 et 4, et tel que repéré par sa trace sur la figure 3.

En pratique, chacun des anneaux 12 forme la partie en relief d'une onde 13 de la paroi 10, et il est séparé d'un anneau 12 suivant par la partie en creux 14 de cette onde 13.

Dans la forme de réalisation représentée, la portion de crête des anneaux 12 est globalement plate, et il en est sensiblement de même pour la portion de fond de la partie en creux 14 des ondes 13 correspondantes.

Soit L la largeur des anneaux 12, mesurée au niveau de leur portion de crête, parallèlement à l'axe A.

De manière connue en soi, enfin, le conduit annelé 11 suivant l'invention comporte, périodiquement, un anneau 12', de largeur L' supérieure à celle L des autres anneaux 12.

Suivant l'invention, cet anneau 12', dit ci-après par simple commodité anneau de repérage, est dépourvu de tout marquage, et, établi systématiquement à une distance P' proche du mètre, il constitue par lui-même un simple repère de longueur pour le conduit annelé 11.

Préférentiellement, et tel que représenté, cet anneau de repérage 12' a, transversalement, un diamètre D égal à celui des autres anneaux 12.

Il s'agit, en pratique, du diamètre nominal du conduit annelé 11.

Préférentiellement, également, l'anneau de repérage 12' a un état de surface différent de celui des autres anneaux 12.

Par exemple, son état de surface est plus rugueux que celui des autres anneaux 12.

Plus précisément, l'anneau de repérage 12' peut, par exemple, être légèrement granité, tandis que les autres anneaux 12 sont lisses.

Mais, abstraction faite de cet état de surface, la portion de crête de l'anneau de repérage 12' est globalement plate, comme celle des autres anneaux 12.

Dans la forme de réalisation représentée, l'anneau de repérage 12' a une largeur L' double de celle L des autres anneaux 12.

Mais, en variante, cette largeur pourrait être inférieure ou supérieure à ce double.

En pratique, la distance P' à laquelle est établi périodiquement un anneau de repérage 12', et qui correspond donc au pas séparant d'un tel anneau de repérage 12' l'anneau de repérage 12' suivant, est égale au mètre, à la valeur près du pas P des ondes 13 du conduit annelé 11.

Ainsi, si, pour un conduit annelé 11 de diamètre nominal D égal à 20 mm, ce pas P est égal à 8 mm, la distance P' s'écarte, au plus, dans un sens ou dans l'autre, de 4 mm par rapport au mètre.

Bien entendu, ces valeurs numériques ne sont données ici qu'à titre indicatif, sans qu'il puisse en résulter une quelconque limitation pour l'invention.

La présente invention ne se limite d'ailleurs pas à la forme de réalisation décrite et représentée, mais englobe toute variante d'exécution.

## Revendications

1. Conduit annelé du genre dont la paroi (10), ondulée longitudinalement dans son épaisseur, suivant un pas (P) régulier, forme transversalement des anneaux (12), avec, périodiquement, un anneau (12') de largeur (L') supérieure à celle (L) des autres anneaux (12), dit ci-après par simple commodité anneau de repérage, caractérisé en ce que l'anneau de repérage (12') est dépourvu de tout marquage, et, établi systématiquement à une distance (P') proche du mètre, il constitue par lui-même un simple repère de longueur pour le conduit.

2. Conduit annelé suivant la revendication 1, caractérisé en ce que l'anneau de repérage (12') a, transversalement, un diamètre (D) égal à celui des autres anneaux (12).

3. Conduit annelé suivant l'une quelconque des revendications 1, 2, caractérisé en ce que l'anneau de repérage (12') a un état de surface différent de celui des autres anneaux (12).

4. Conduit annelé suivant la revendication 3, caractérisé en ce que l'anneau de repérage (12') a un état de surface plus rugueux que celui des autres anneaux (12).
